# EUROPÄISCHE PATENTSCHRIFT

(11) **EP 3 341 319 B1**
(45) Veröffentlichungstag und Bekanntmachung des Hinweises auf die Patenterteilung: **05.08.2020**
(21) Anmeldenummer: 16757646.1
(22) Anmeldetag: 26.08.2016
(51) Int. Cl.: B66F 7/06, B62B 5/00, B62B 3/04, B62B 3/02

(54) **LADEVORRICHTUNG**
LOADING APPARATUS
DISPOSITIF DE CHARGEMENT

(30) Priorität: 28.08.2015 DE 102015114408
(43) Veröffentlichungstag der Anmeldung: 04.07.2018
(73) Patentinhaber: XETTO GmbH, 6331 Hünenberg (CH)
(72) Erfinder: MÜLLER, Peter, 86179 Augsburg (DE); STOLLE, Klaus, 86972 Altenstadt (DE)
(74) Vertreter: Grättinger Möhring von Poschinger Patentanwälte Partnerschaft mbB
(86) Internationale Anmeldenummer: PCT/EP2016/070192
(87) Internationale Veröffentlichungsnummer: WO 2017/036960

(56) Entgegenhaltungen:
- DE-A1-102013 008 020
- US-A1- 2011 262 261

## Beschreibung

Die vorliegende Erfindung betrifft eine Ladevorrichtung, insbesondere um Frachtgut auf einer Verkehrsfläche zu befördern und in ein Transportfahrzeug ein- bzw. aus diesem auszuladen, umfassend eine Basisstruktur, eine sich auf dieser abstützende, doppelt wirkende Hubeinrichtung und eine Ladestruktur mit einem Hubrahmen, an welchem die Hubeinrichtung angreift, und einem an dem Hubrahmen über eine Ausziehführung gelagerten Frachtgutträger, der ein der Fortbewegung der Ladevorrichtung auf der Verkehrsfläche - bei vollständig eingefahrener Hubeinrichtung - dienendes Fahrwerk aufweist, wobei die Hubeinrichtung als Scherenheber-Hubeinrichtung mit sich kreuzenden, an einem Gelenkpunkt gelenkig miteinander verbundenen Lenkern ausgeführt ist, wobei sich mindestens ein Linearantrieb zwischen einem dem Hubrahmen zugeordneten ersten Anlenkpunkt und einem der Scherenheber-Hubeinrichtung zugeordneten zweiten Anlenkpunkt erstreckt.

Eine Ladevorrichtung der vorstehend genannten Art ist aus der DE 102013008020 A1 bekannt. In diesem Dokument, auf welches Bezug genommen wird, wird eingehend auf die Nutzung solcher Ladevorrichtungen eingegangen sowie zum einschlägigen Stand der Technik ausgeführt.

Eine hinsichtlich der Zweckbestimmung sowie grundlegender konstruktiver Gestaltungsmerkmale vergleichbare Ladevorrichtung ist aus der US 2011/262261 A1 bekannt. Die Hubeinrichtung soll dabei allerdings zwei Paare einander jeweils kreuzender Hydraulikzylinder umfassen, welche endseitig sowohl mit der Basisstruktur als auch mit dem Hubrahmen gelenkig verbunden sind.

Die der vorliegenden Erfindung zugrundeliegende Zielsetzung besteht darin, eine Ladevorrichtung der eingangs angegebenen Art bereitzustellen, die gegenüber derjenigen nach der DE 102013008020 A1 hinsichtlich praxisrelevanter Eigenschaften weiter verbessert ist.

Gelöst wird die vorstehend dargelegte Aufgabenstellung gemäß der vorliegenden Erfindung, indem bei der Ladevorrichtung der eingangs angegebenen Art bei vollständig eingefahrener Hubeinrichtung der Gelenkpunkt, an welchem die Lenker der Scherenheber-Hubeinrichtung gelenkig miteinander verbunden sind, in der Ebene von Längsträgern liegt, welche einen Teil des Hubrahmens bilden, und dass der erste Anlenkpunkt des mindestens einen Linearantriebs oberhalb der Ebene der Längsträger des Hubrahmens an einer diese miteinander verbindenden Brückentraverse angeordnet ist. Der besagte Gelenkpunkt der Scherenheber-Hubeinrichtung liegt, mit anderen Worten, bei vollständig eingefahrener Hubeinrichtung in der durch Längsträger des Hubrahmens aufgespannten "Ebene" (s.u.); und infolge einer über die Ebene der Längsträger des Hubrahmens hinaus überhöhten Ausführung einer vorderen Aussteifungsstruktur des Hubrahmens als besagte Brückentraverse liegt der erste Anlenkpunkt des mindestens einen - bevorzugt als Hydraulikzylinder ausgeführten - Linearantriebs oberhalb der Ebene der Längsträger des Hubrahmens. In Anwendung der vorliegenden Erfindung lässt sich eine Ladevorrichtung der hier in Rede stehenden Art bereitstellen, welche sich bei einer hohen zulässigen Last durch einen besonders flachen Aufbau auszeichnen kann. Dies wirkt sich nicht nur positiv aus im Hinblick auf eine optimale Ausnutzung des Frachtvolumens eines Transportfahrzeugs, auf welchem die Ladevorrichtung (mit aufgesetzter Last) zu befördern ist. Vielmehr kann sich auch ein entsprechend niedrig liegender Schwerpunkt des Gesamtsystems aus Ladevorrichtung und aufgesetzter Last ergeben, was für die Standsicherheit des entsprechenden Systems auf der Ladefläche des fahrenden Transportfahrzeugs von erheblicher Bedeutung ist. Umgekehrt kann sich bei einer vorgegebenen Höhe des Frachtgutträgers über dem Boden bei vollständig eingefahrener Hubeinrichtung eine besonders große Bodenfreiheit (unterhalb der angehobenen Basisstruktur) ergeben; dies ist von entscheidendem Vorteil für die Brauchbarkeit der Ladevorrichtung auf unbefestigtem Untergrund oder beim Überwinden/Überfahren von Stufen, Schwellen oder Kanten.

In bevorzugter Weiterbildung der Erfindung umfasst die Basisstruktur einen Basisrahmen von einer im Wesentlichen rechteckigen, geschlossenen Geometrie mit zwei Längsholmen, einem vorderen Querholm und einem hinteren Querholm, wobei der hintere Querholm zur Ausbildung von Stützfüßen besonders bevorzugt seitwärts über die beiden Längsholme hinaus verlängert sein kann. Dergleichen ist im Hinblick auf Festigkeit der Basisstruktur und Standsicherheit der Ladevorrichtung günstig. In die Längsholme des Basisrahmens können untere Linearführungen für mindestens einen ersten Lenker der Scherenheber-Hubeinrichtung integriert sein (sog. "untere Schiebelager"). Der mindestens eine, sich mit dem ersten Lenker kreuzende zweite Lenker der Scherenheber-Hubeinrichtung ist demgegenüber bevorzugt in vorderen Eckbereichen des Basisrahmens verschwenkbar gelenkig angelenkt (sog. "untere Festlager"). Diese Anordnung von unterem Festlager und unterem Schiebelager trägt weiterhin zu einer besonders geringen Bauhöhe der Ladevorrichtung bei.

Auch der Hubrahmen weist, gemäß einer anderen bevorzugten Weiterbildung, eine im Wesentlichen rechteckige, geschlossene Geometrie auf, indem die beiden Längsträger zueinander parallel und über mindestens zwei Querträger starr miteinander verbunden sind. Der (in Ausziehrichtung des Frachtgutträgers) vordere Querträger kann dabei insbesondere in Form einer komplexen vorderen Aussteifungsstruktur ausgeführt sein, die sich in Gestalt der besagten Brückentraverse über die Ebene der Längsträger erhebt. Dies ist von erheblichem Vorteil für die Kinematik der Hubeinrichtung (s.u.). An dem hinteren Querträger des Hubrahmens ist bevorzugt eine Bedieneinheit angebracht, und zwar besonders bevorzugt nach oben verschwenkbar und/oder abnehmbar gelagert.

In der "Ebene" des Hubrahmens, welche selbstverständlich keine Ebene im mathematischen Sinne bildet sondern vielmehr einen Bereich mit einer durch die Höhe des Hubrahmens definierten vertikalen Erstreckung, sind gemäß einer abermals anderen mit besonderen Vorteilen verbundenen Weiterbildung der Erfindung auch die Ausziehführung sowie die dem Hubrahmen zugeordneten Linearführungen ("obere Schiebelager") für die Scherenheber-Hubeinrichtung angeordnet. Hierzu können, sofern der Hubrahmen solche umfasst, die Längsträger des Hubrahmens einen integralen Bestandteil der Ausziehführung darstellen, indem sie jeweils die Grundschiene eines Teleskopauszugs (s.u.) bilden, in der jeweils eine ausziehbare Schiene (Ausziehschiene oder Zwischenschiene) linear verschiebbar geführt ist. Auf der gegenüberliegenden Seite kann an jedem der beiden Längsträger eine Führungsschiene angebracht sein, in der das obere Ende des mindestens einen zweiten Lenkers der Scherenheber-Hubeinrichtung geführt ist. Auch der mindestens eine Gelenkpunkt, an dem der mindestens eine erste Lenker der Scherenheber-Hubeinrichtung um eine horizontale Achse verschwenkbar gelenkig gelagert ist (oberes Festlager), liegt besonders bevorzugt in der besagten "Ebene" des Hubrahmens.

Zur Erhöhung der Steifigkeit und Reduzierung der Gefahr einer Verdrillung der Scherenheber-Hubeinrichtung bei minimalem Gewicht weist diese besonders bevorzugt zwei zueinander parallele erste Lenker und zwei diese kreuzende, zueinander parallele zweite Lenker auf, wobei die Lenker eines jeden Paares starr mechanisch miteinander verbunden und gekoppelt sind. Und der Verstellantrieb der Hubeinrichtung umfasst bevorzugt zwei zueinander parallele, als Hydraulikzylinder ausgeführte Linearantriebe.

Gemäß einer wiederum anderen bevorzugten Weiterbildung der vorliegenden Erfindung ist an der weiter oben bereits erläuterten, als Brückentraverse ausgeführten vorderen Aussteifungsstruktur des Hubrahmens besonders bevorzugt zwischen den beiden Hydraulikzylindern ein diese beaufschlagendes Hydraulikaggregat (samt zugehöriger Baugruppen wie Tank und Ventileinheit) angebracht. Besonders kurze und geschützt angeordnete Hydraulikleitungen tragen in diesem Falle zur besonderen Zuverlässigkeit und Funktionssicherheit der Ladevorrichtung bei. Eine der Versorgung des Hydraulikaggregats mit elektrischer Energie dienende elektrische Speichereinheit (samt elektronischer Steuereinheit der Hubeinrichtung) ist demgegenüber bevorzugt unten an einer zusätzlichen, die beiden Längsträger miteinander verbindenden, den Hubrahmen weiterhin aussteifenden "mittleren" Hubrahmen-Traverse angebracht.

Die Ausziehführung, über die der Frachtgutträger ausziehbar mit dem Hubrahmen verbunden ist, umfasst in bevorzugter Weiterbildung der Erfindung zwei Teleskop-Vollauszüge mit jeweils einer hubrahmenseitigen Grundschiene (s.o.), einer frachtgutträgerseitigen Ausziehschiene und einer Zwischenschiene. Das an dem Frachtgutträger vorgesehene Widerlager für die Ausziehführung umfasst besonders bevorzugt zwei Metallprofile (insbesondere Aluminium-Strangpressprofile) in Form von Schienen mit im Wesentlichen L-förmiger Grundform, die mit jeweils einem ihrer Schenkel mit der Plattform des Frachtgutträgers (an dessen Unterseite) verbunden sind und an deren jeweils anderen Schenkel die zugeordnete Ausziehschiene des betreffenden Teleskop-Vollauszuges angebracht ist.

Die Ausziehführung weist, gemäß einer wiederum anderen bevorzugten Weiterbildung der Erfindung, eine Rasteinrichtung auf, die beim Ausziehen der Ausziehführung zwischen deren vollständig eingefahrener Stellung und deren vollständig ausgefahrener Stellung wirkt und das Ausziehen der Ausziehführung an einer vorgegebenen Stoppstellung des Frachtgutträgers relativ zum Hubrahmen unterbricht. Auf diese Weise erhält der Benutzer (bei teilweise ausgezogenem Frachtgutträger) Gelegenheit sich zu vergewissern, dass bei einer Fortsetzung der Ausziehbewegung des Frachtgutträgers dessen Übergabe (mit dem Fahrgestell) auf die Ladefläche des zu beladenden Transportfahrzeugs sichergestellt ist. Die Stoppstellung, bis zu der sich der Frachtgutträger, ohne die Rasteinrichtung zu entriegeln, ausziehen lässt, ist so gewählt, dass die Standsicherheit der Ladevorrichtung bei angehobener Ladestruktur und bis zur Stoppstellung ausgezogenem Frachtgutträger noch in jedem Falle gewährleistet ist. Sie befindet sich typischerweise auf etwa 20-35% des vollständigen Ausziehweges der Ausziehführung. Bevorzugt wird die weiter oben erläuterte mittlere Hubrahmen-Traverse so platziert, dass bereits bei nur bis zur Stoppstellung ausgezogenem Frachtgutträger von oben her Zugriff auf die an der besagten Hubrahmen-Traverse angebrachte elektrische Speichereinheit besteht, insbesondere um diese auszutauschen.

Die vorstehend erläuterte Rasteinrichtung ist bevorzugt nur bei einer Stellung des Frachtgutträgers nahe der Stoppstellung entriegelbar, und zwar besonders bevorzugt mittels einer mittig an dem rückwärtigen Ende des Frachtgutträgers angeordneten Betätigungstaste und einer von dieser betätigten Entriegelungsmechanik, welche parallel und gleichzeitig auf zwei, jeweils einem Vollauszug zugeordnete Rastelemente wirkt. Mittels der Betätigungstaste kann in besonders bevorzugter Weiterbildung ferner auch noch eine weitere der Ausziehführung zugeordnete Rasteinrichtung entriegelbar sein, welche die Ausziehführung in ihrer vollständig eingefahrenen Stellung verriegelt.

Eine wiederum andere bevorzugte Weiterbildung der vorliegenden Erfindung zeichnet sich dadurch aus, dass bei den beiden jeweils eine Grundschiene, eine Zwischenschiene und eine Ausziehschiene umfassenden Vollauszügen jeweils eine die Reihenfolge der Auszieh- bzw. Einschubbewegung der Ausziehschiene und der Zwischenschiene steuernde Priorisierungsmechanik vorgesehen ist. Die Ausziehbewegung des Frachtgutträgers erfolgt dabei zunächst (bei relativ zur Zwischenschiene verriegelter Ausziehschiene) ausschließlich unter Verschieben der Zwischenschiene relativ zur Grundschiene; erst wenn der Ausziehweg der Zwischenschiene ausgeschöpft ist, wird die Ausziehschiene freigegeben und kann, für eine Fortsetzung der Ausziehbewegung des Frachtgutträgers, relativ zur Zwischenschiene bewegt werden. Im Hinblick auf ein hohes Lasttragevermögen auch bei vollständig ausgezogenem Vollauszug ist im Übrigen das rückwärtige Ende der Ausziehschiene in der Zwischenschiene mittels Gleitblöcken geführt.

Nach einer abermals anderen bevorzugten Weiterbildung der vorliegenden Erfindung weisen die weiter oben bereits thematisierten, das Widerlager für die Ausziehführung bildenden Metallprofile jeweils, in den Winkelbereich zwischen den beiden Schenkeln eingebettet, einen rohrförmigen Bereich auf. Die rohrförmigen Bereiche dienen nicht nur der Aussteifung der Metallprofile. Sie nehmen weiterhin - in dessen Ruhestellung - dergestalt einen etwa U-förmigen Schiebebügel, welcher an dem Frachtgutträger zwischen einer aufragenden Nutzstellung und einer flach unter der Ladeplattform verstauten Ruhestellung verschwenkbarer angebracht ist, teilweise auf, dass die beiden zueinander parallelen Schenkel des Schiebebügels zumindest teilweise in die rohrförmigen Bereichen der Metallprofile eingeschoben werden können.

Die Ladeplattform des Frachtgutträgers ist bevorzugt als monolithische Kunststoffplattform ausgeführt. Besonders bevorzugt besteht sie aus faserverstärktem Kunststoff und weist auf ihrer Unterseite eine wabenförmige Aussteifungsstruktur auf. An der Unterseite der Kunststoffplattform sind - zusätzlich zum Widerlager für die Ausziehführung - bevorzugt vier Radträger angebracht, und zwar dergestalt getrennt von dem Widerlager für die Ausziehführung, dass das Widerlager für die Ausziehführung und die Radträger keine direkte Verbindung untereinander aufweisen. Das Fahrwerk weist bevorzugt zwei in Ausziehrichtung der Ausziehführung angeordnete vordere Rollen und zwei entgegen der Ausziehrichtung der Ausziehführung angeordnete hintere Rollen auf, wobei den hinteren Rollen Feststellbremsen zugeordnet sind, welche über an der rückwärtigen Stirnseite des Frachtgutträgers angeordnete Bremsbedienhebel betätigbar sind. Die Bremsbedienhebel können dabei Handgriff-Mulden aufweisen, damit sie zugleich als Griffe dienen können, an denen eine seitlich von der Ladevorrichtung stehende Bedienperson anfassen kann, um den Frachtgutträger auszufahren bzw. über die Basisstruktur zurückzuziehen.

Eine abermals andere bevorzugte Weiterbildung der vorliegenden Erfindung zeichnet sich dadurch aus, dass an dem Frachtgutträger, insbesondere an der Oberseite der Ladeplattform im Bereich der Längskanten, Zurrstrukturen angebracht sind. Besonders bevorzugt ist jeweils eine Zurrstruktur direkt mit einem Radträger verbunden. Jede Zurrstruktur umfasst bevorzugt ein Zurrelement mit mindestens einem daran seitlich angeordneten Verzurrpunkt für das Verzurren der Ladevorrichtung auf einer Fahrzeugladefläche und mindestens einem oben an dem Zurrelement angeordneten Niederzurrpunkt für das Niederzurren des Frachtguts auf dem Frachtgutträger. Mit anderen Worten sind in diesem Fall an jeder der Verzurrstrukturen der mindestens eine (obere) Niederzurrpunkt und der mindestens eine (seitliche) Verzurrpunkt über das betreffende Zurrelement unmittelbar kraftübertragend miteinander verbunden. Jedes Zurrelement kann dabei insbesondere einen - mit dem zugeordneten Radträger verbundenen - Kern und eine diesen zumindest teilweise umgreifende, durch den Kern ausgesteifte Mantelstruktur aufweisen. An dem Zurrelement sind besonders bevorzugt - über diese unmittelbar kraftübertragend miteinander verbunden - eine Abfolge von seitlichen Verzurrpunkten und eine Abfolge von oberen Niederzurrpunkten vorgesehen. Die Abfolge von Niederzurrpunkten und die Abfolge von Verzurrpunkten können dabei - linear mit konstanter Teilung aneinandergereiht - jeweils einen Abschnitt einer Befestigungsschiene (sog. "Airline-Schiene") bilden, wie sie aus der Luftfahrt für die Befestigung von Einbaukomponenten (z.B. der Bestuhlung) in Luftfahrzeugen bekannt sind.

Diverse der vorstehend im Rahmen vor bevorzugten Weiterbildungen der erfindungsgemäßen Ladevorrichtung dargelegten und erläuterten technischen Aspekte sind ersichtlich mit Vorteil auch für solche eingangs definierten Ladevorrichtungen einsetzbar, deren Scherenheber-Hubeinrichtung nicht gemäß der vorliegenden Erfindung ausgeführt sind. Die Anmelderin behält sich vor, insoweit - insbesondere auf dem Wege von Teilanmeldungen - für die besagten besonderen technischen Aspekte isolierten Schutz zu beanspruchen.

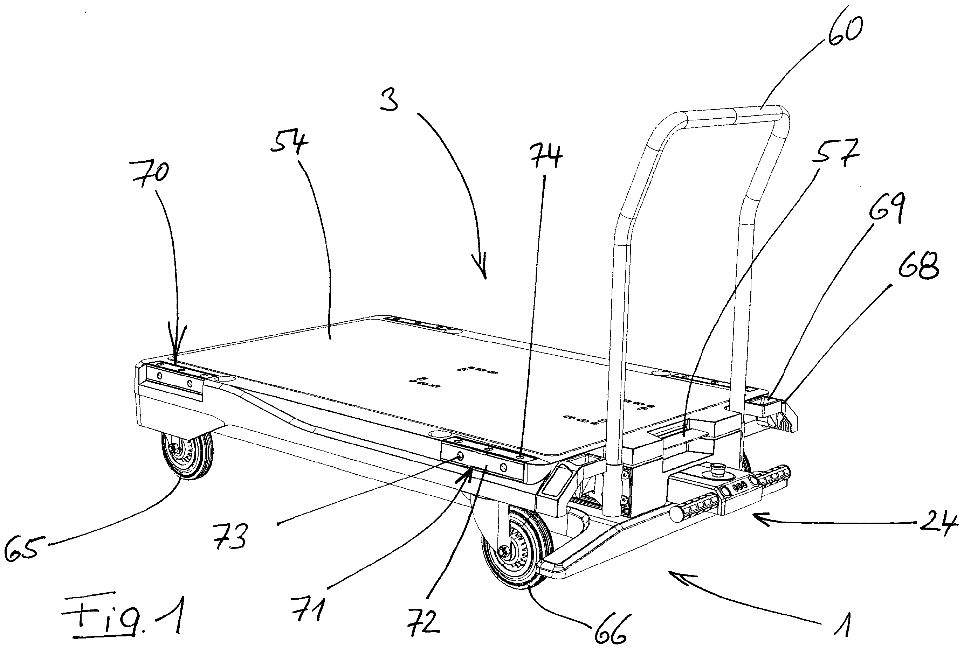

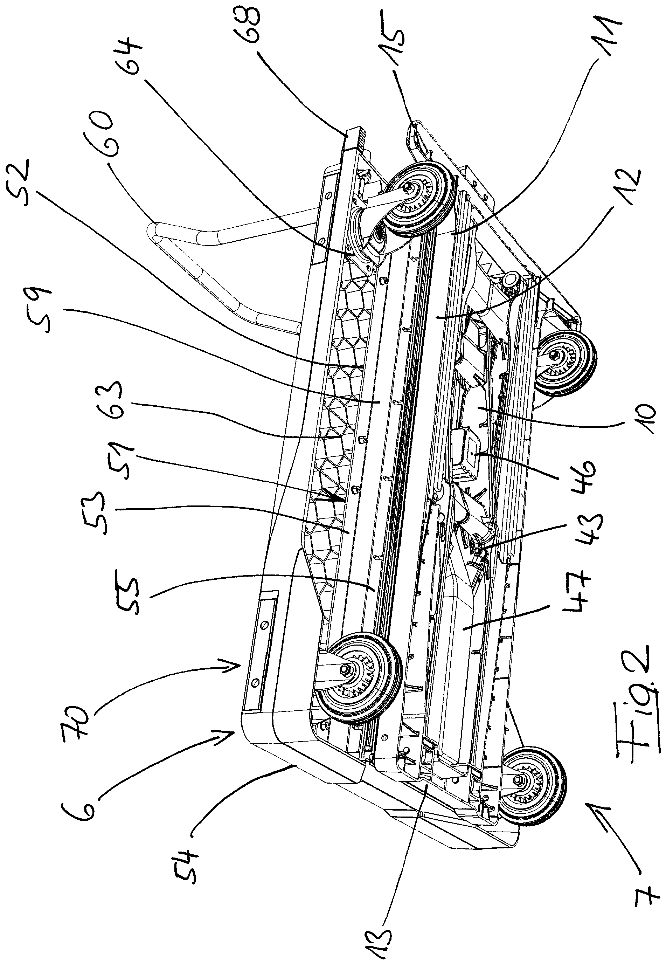

Im Folgenden wird die vorliegende Erfindung anhand einer in der Zeichnung in verschiedenen Betriebszuständen und aus unterschiedlichen Perspektiven veranschaulichten Ladevorrichtung nach einem bevorzugten Ausführungsbeispiel näher erläutert. Dabei zeigen
- Fig. 1 und 2: die Ladevorrichtung bei abgesenkter Ladestruktur,
- Fig. 3 und 4: die Ladevorrichtung bei angehobener Ladestruktur und vollständig eingefahrenem Frachtgutträger,
- Fig. 5 bis 7: die Ladevorrichtung bei angehobener Ladestruktur und teilweise ausgefahrenem Frachtgutträger,
- Fig. 8 und 9: die Ladevorrichtung bei angehobener Ladestruktur und vollständig ausgefahrenem Frachtgutträger,
- Fig. 10: in Detailansicht den vorderen Endbereich des Hubrahmens der Ladevorrichtung nach den Figuren 1-9,
- Fig. 11: in Detailansicht die vordere Hälfte des Hubrahmens der Ladevorrichtung nach den Figuren 1-10,
- Fig. 12: in Detailansicht die vordere-linke Zurrstruktur der Ladevorrichtung nach den Figuren 1-11 und

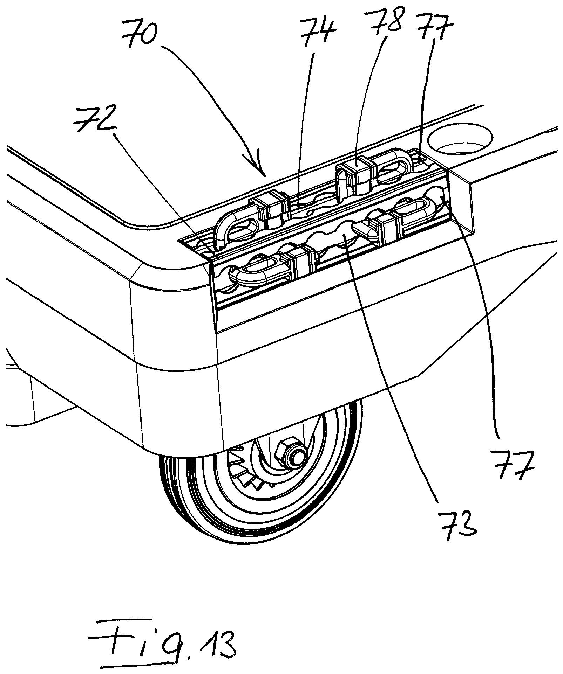

- Fig. 13: eine abgewandelte Ausgestaltung der bei der Ladevorrichtung nach den Figuren 1-12 realisierten Zurrstruktur.

Die in der Zeichnung veranschaulichte Ladevorrichtung dient, wie jene nach der DE 102013008020 A1, insbesondere dazu, Frachtgut auf einer Verkehrsfläche zu befördern und in ein Transportfahrzeug ein- bzw. aus diesem auszuladen. Sie umfasst als Hauptbaugruppen bzw. Hauptkomponenten eine Basisstruktur 1, eine sich auf dieser abstützende Hubeinrichtung 2 und eine Ladestruktur 3. Letztere umfasst ihrerseits einen Hubrahmen 4, an welchem die Hubeinrichtung 2 angreift, und einem an dem Hubrahmen 4 über eine Ausziehführung 5 gelagerten Frachtgutträger 6. Dieser weist ein Fahrwerk 7 auf, welches - bei vollständig eingefahrener (abgesenkter) Hubeinrichtung 2 und dementsprechend von der Verkehrsfläche abgehobener Basisstruktur 1 - der Fortbewegung der Ladevorrichtung auf der Verkehrsfläche dient. Die Hubeinrichtung 2, welche als Scherenheber-Hubeinrichtung mit sich kreuzenden, an einem Gelenkpunkt 8 gelenkig miteinander verbundenen Lenkern 9, 10 ausgeführt ist, ist in dem Sinne doppelt wirkend ausgeführt, dass sie nicht nur die Ladestruktur 3 anheben (und absenken) kann, wenn sich die Basisstruktur 1 auf einer Verkehrsfläche abstützt, sondern vielmehr auch die Basisstruktur 1 anheben (und absenken) kann, wenn sich die Ladestruktur 3 über das - an dessen Frachtgutträger 6 angeordnete - Fahrwerk 7 auf einem Untergrund abstützt, sei es auf der Verkehrsfläche oder aber der Ladefläche eines Transportfahrzeuges. In dem vorstehend dargelegten Umfang entspricht die Ladevorrichtung gemäß dem in der Zeichnung dargestellten Ausführungsbeispiel dem aus der DE 102013008020 A1 und dort eingehend beschriebenen Stand der Technik, so dass es weiterer Erläuterungen an dieser Stelle nicht bedarf.

Die Basisstruktur 1 umfasst einen Basisrahmen 11 von einer im Wesentlichen rechteckigen, geschlossenen Geometrie mit zwei Längsholmen 12, einem vorderen Querholm 13 und einem hinteren Querholm 14. Der hintere Querholm 14 ist dabei seitwärts über die beiden Längsholme 12 hinaus verlängert, wobei der jeweilige Überstand jeweils einen Stützfuß 15 bildet. In die Längsholme 12 sind die unteren Linearführungen 16 für die beiden ersten Lenker 9 der Scherenheber-Hubeinrichtung 2 integriert (sog. "untere Schiebelager"). Die beiden zweiten Lenker 10 der der Scherenheber-Hubeinrichtung 2 sind demgegenüber im Bereich verstärkter vorderer Ecken 17 des Basisrahmens 11 an diesem um die Schwenkachse 18 verschwenkbar gelenkig angelenkt (sog. "untere Festlager").

Auch der Hubrahmen 4 weist eine im Wesentlichen rechteckige, geschlossene Geometrie auf. Er verfügt über zwei zueinander parallele Längsträger 19, welche über einen vordere Aussteifungsstruktur 20 und einen hinteren Querträger 21 miteinander verbunden sind. Die vordere Aussteifungsstruktur 20 erhebt sich in Form einer Brückentraverse 22 über die Ebene der Längsträger 19. Weiterhin sind die beiden Längsträger 19 etwa auf halber Länge mittels einer mittigen Traverse 23 miteinander verbunden. An dem hinteren Querträger 21 ist dabei eine Bedieneinheit 24 mit zwei Griffen 25 und Betätigungselementen 26 für die Hubeinrichtung 2 angebracht. Die Bedieneinheit 24 ist an dem hinteren Querträger 21 nach oben verschwenkbar und/oder abnehmbar gelagert.

In der durch die Längsträger 19 des Hubrahmens 4 definierten "Ebene" sind auch die Ausziehführung 5 sowie die dem Hubrahmen 4 zugeordneten Linearführungen 27 ("obere Schiebelager") für die Scherenheber-Hubeinrichtung 2 angeordnet. Hierzu stellen die Längsträger 19 des Hubrahmens 4 einen integralen Bestandteil der Ausziehführung 5 dar, indem sie jeweils die (z.B. mit einem seitwärts nach außen hin offenen C-Profil ausgeführte) Grundschiene 28 eines Teleskop-Vollauszugs 29 (s.u.) bilden, in der jeweils eine ausziehbare Schiene 30 linear verschiebbar geführt ist. Innen ist an jedem der beiden Längsträger 19 eine Führungsschiene 31 angebracht, in denen die oberen Enden 32 der beiden zweiten Lenker 10 mittels in die Führungsschienen 31 eingreifender Rollenbolzen 33 geführt sind. Auch die Gelenkpunkte 34, an denen die beiden ersten Lenker 9 der Scherenheber-Hubeinrichtung 2 um die horizontale Achse 35 verschwenkbar gelenkig - in dessen beiden vorderen Eckbereichen 36 - an dem Hubrahmen 4 angelenkt sind ("obere Festlager"), liegen in der besagten Ebene des Hubrahmens 4, d.h. der Ebene der Hubrahmen-Längsträger 19. Sie sind an der im Frontbereich des Hubrahmens 4 vorgesehenen, diesen aussteifenden Aussteifungsstruktur 20 angeordnet. In Verbindung mit der Geometrie der beiden ersten Lenker 9 und der beiden zweiten Lenker 10 führt dies dazu, dass bei vollständig eingefahrener Hubeinrichtung 2 und dementsprechend vollständig angehobener Basisstruktur 1 der besagte Gelenkpunk 8, an dem die Lenker 9 und 10 der Scherenheber-Hubeinrichtung 2 einander kreuzend gelenkig miteinander verbundenen sind, in der Ebene der Hubrahmen-Längsträger 19 liegt.

Die beiden ersten Lenker 9 sind im Bereich ihrer unteren Enden über die Vorsprünge 37 miteinander starr mechanisch verbunden und gekoppelt. Die beiden zweiten Lenker 10 sind demgegenüber in der Mitte sowie im Bereich ihrer oberen Enden über die Vorsprünge 38 und 39 miteinander starr mechanisch verbunden und gekoppelt.

Der Verstellantrieb der Hubeinrichtung umfasst zwei als Hydraulikzylinder 40 ausgeführte Linearantriebe 41. Jeder der beiden (doppeltwirkend ausgeführten) Hydraulikzylinder 40 erstreckt sich zwischen einem dem Hubrahmen 4 zugeordneten, an der Aussteifungsstruktur 20 angeordneten ersten Anlenkpunkt 42 und einem der Scherenheber-Hubeinrichtung 2 zugeordneten, an jeweils einem der (inneren) zweiten Lenker 10 angeordneten zweiten Anlenkpunkt 43. Infolge der über die Ebene der Längsträger 19 hinaus überhöhten Ausführung der vorderen Aussteifungsstruktur 20 als Brückentraverse 22 liegt der erste Anlenkpunkt 42 der Hydraulikzylinder 40 oberhalb der Ebene der Längsträger 19 des Hubrahmens 4. Der zweite Anlenkpunkt 43 der beiden Hydraulikzylinder 40 liegt gegenüber der durch die unteren Festlager 44 und die Kreuzungs-Gelenkpunkte 8 definierten Ebene nach unten versetzt.

Zwischen den beiden Hydraulikzylindern 40 ist an der Brückentraverse 22 ein die Hydraulikzylinder 40 beaufschlagendes Hydraulikaggregat 45 (samt zugehöriger Baugruppen wie Tank und Ventileinheit) befestigt. Die der Versorgung des Hydraulikaggregats 45 mit elektrischer Energie dienende elektrische Speichereinheit 46 (samt elektronischer Steuereinheit der Hubeinrichtung 2) ist demgegenüber unterhalb der mittleren Hubrahmen-Traverse 23 an dieser angebracht. Für die spritzwassergeschützte Unterbringung der betreffenden Komponenten ist ein zweischaliges, einen nach unten abnehmbaren Deckel 47 aufweisendes Gehäuse 48 vorgesehen, das sich zwischen der mittleren Traverse 23 und der Aussteifungsstruktur 20 erstreckt. Die elektrische Speichereinheit 46 ist mittels einer Schnellwechselkupplung an einem korrespondierenden, an der Traverse 23 befestigten Sockel angedockt.

Die Ausziehführung 5, über die der Frachtgutträger 6 mit dem Hubrahmen 4 verbunden ist, umfasst zwei Teleskop-Vollauszüge 29 mit jeweils einer hubrahmenseitigen Grundschiene 28 (s.o.), einer frachtgutträgerseitigen Ausziehschiene 49 und einer Zwischenschiene 50. Das an dem Frachtgutträger 6 vorgesehene Widerlager 51 für die Ausziehführung 5 umfasst zwei Metallprofile 52 (insbesondere Aluminium-Strangpressprofile) in Form von Schienen mit im Wesentlichen L-förmiger Grundform. Diese sind mit jeweils einem Schenkel 53 mit der Plattform 54 des Frachtgutträgers 6 (an dessen Unterseite) verbunden. An dem jeweils anderen Schenkel 55 der Metallprofile 52 ist die zugeordnete Ausziehschiene 49 des betreffenden Teleskop-Vollauszuges 29 angebracht.

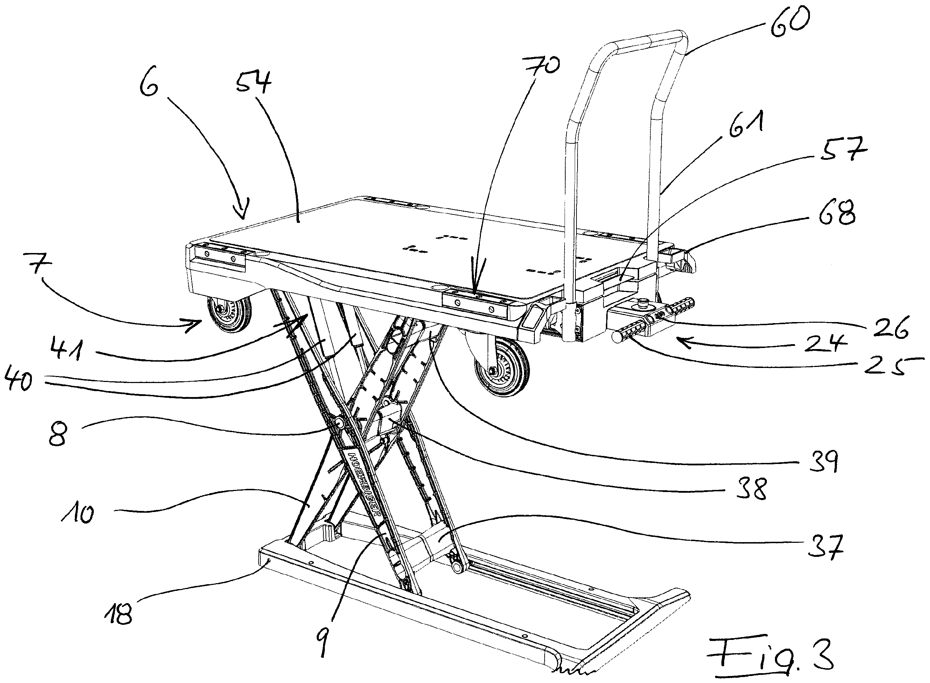

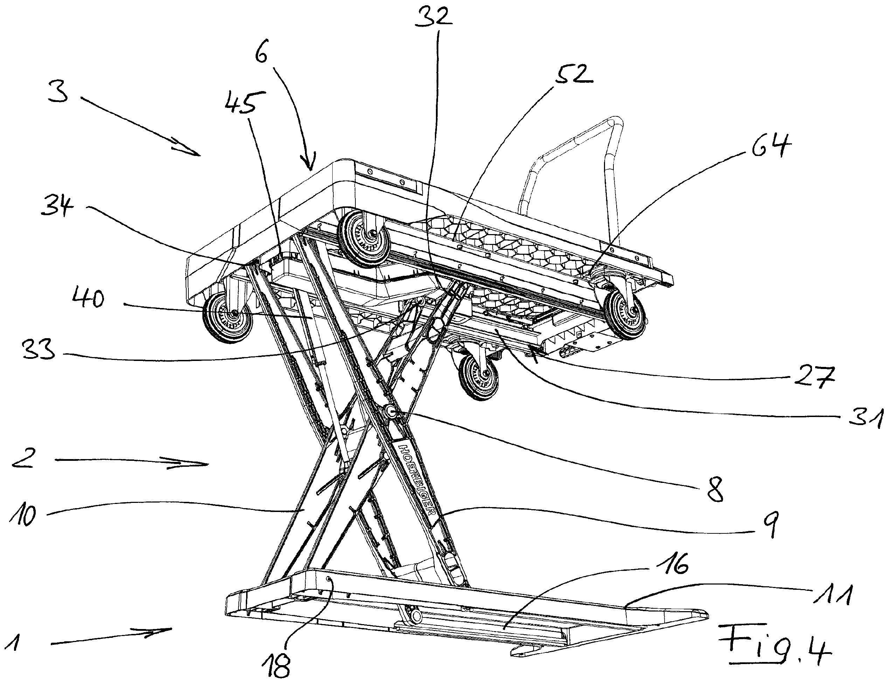

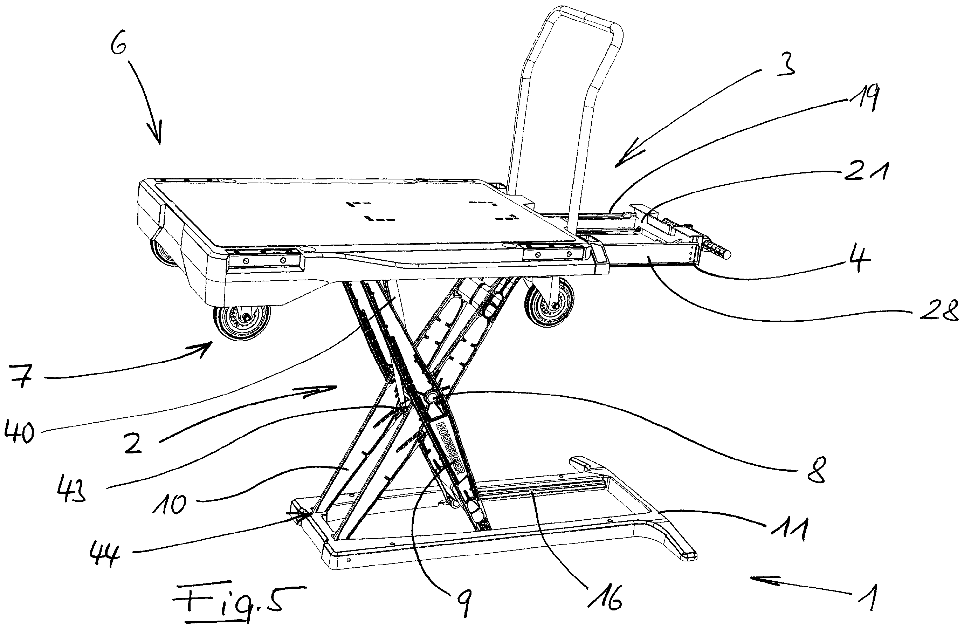

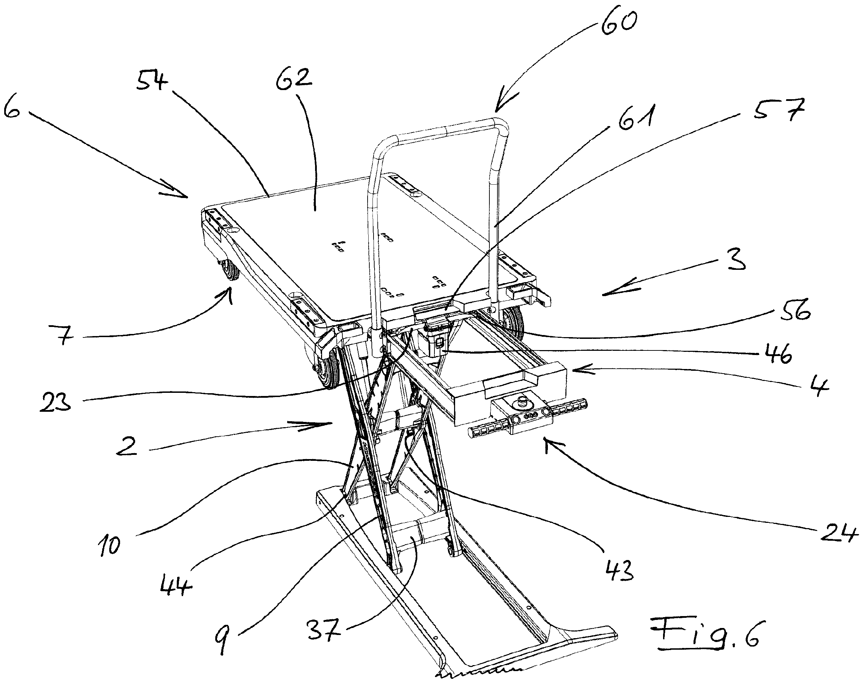

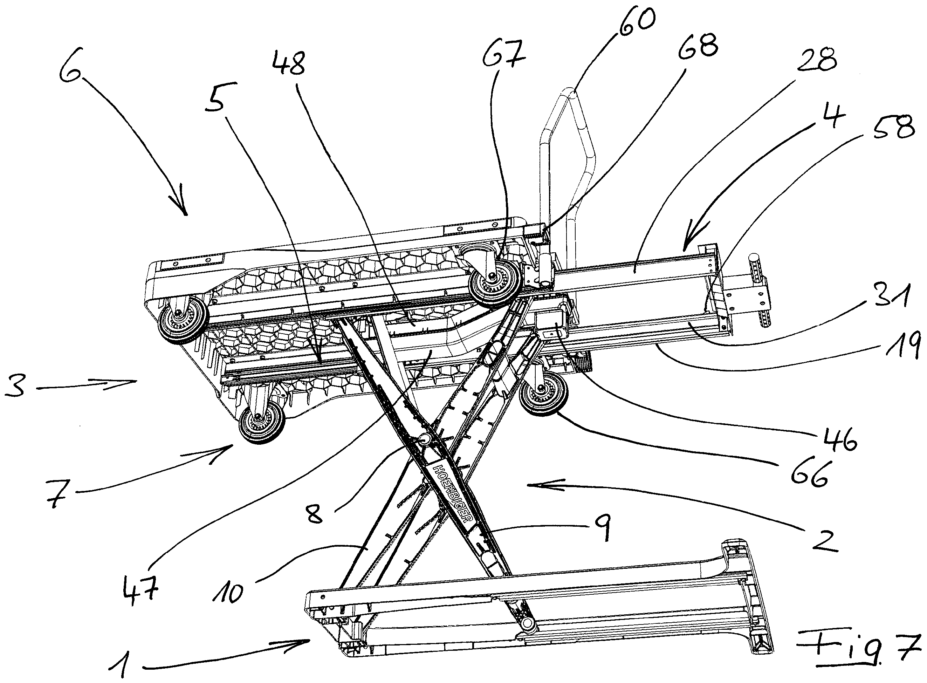

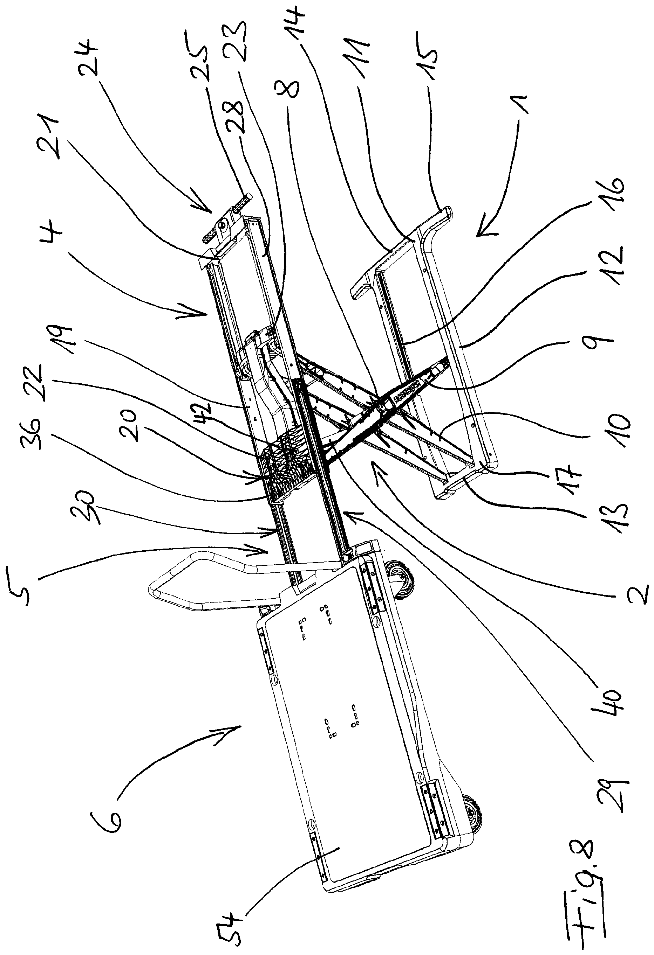

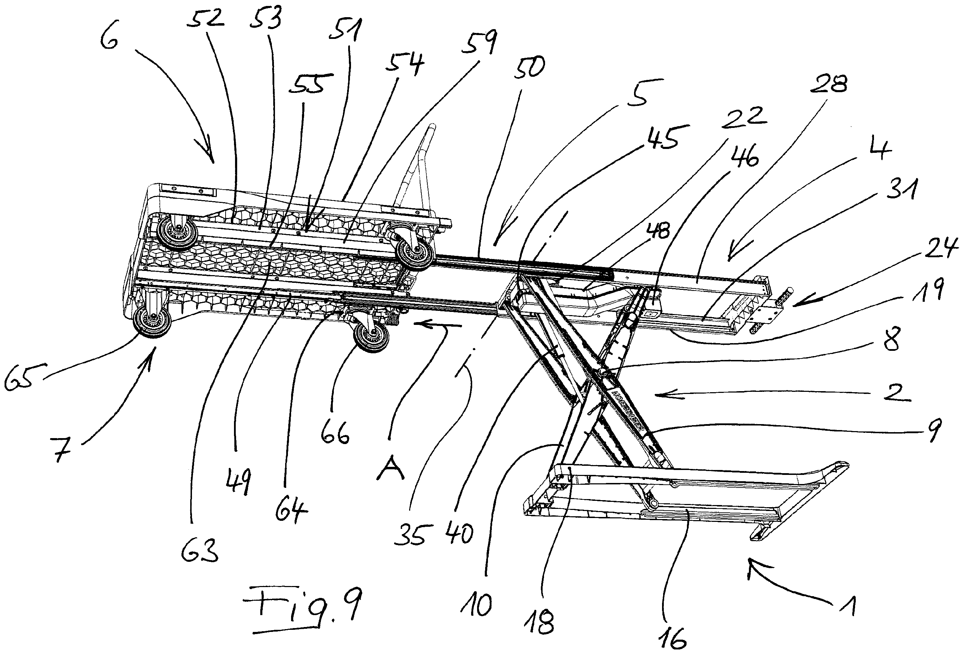

Die Ausziehführung 5 weist eine Rasteinrichtung 56 auf, die beim Ausziehen der Ausziehführung 5 zwischen deren vollständig eingefahrener Stellung (Fig. 3 und 4) und deren vollständig ausgefahrener Stellung (Figuren 8 und 9) wirkt und das Ausziehen der Ausziehführung 5 an einer vorgegebenen Stoppstellung (Figuren 5-7) des Frachtgutträgers 6 relativ zum Hubrahmen 4 unterbricht. Die Stoppstellung befindet sich auf etwa 30% des vollständigen Ausziehweges der Ausziehführung 5, so dass sich der Frachtgutträger 6, ohne die Rasteinrichtung 56 zu entriegeln, nur etwa bis zur mittleren Traverse 23 des Hubrahmens 4 ausziehen lässt. So ist sichergestellt, dass die elektrische Speichereinheit 46 - für deren möglichen Austausch - auch bei nur teilweise ausgezogener Ausziehführung 5 hinreichend gut zugänglich ist. Die besagte Rasteinrichtung 56 ist nur bei einer Stellung des Frachtgutträgers 6 nahe der Stoppstellung entriegelbar, und zwar mittels der mittig an dem rückwärtigen Ende des Frachtgutträgers 6 angeordneten Betätigungstaste 57 und der von dieser betätigten Entriegelungsmechanik, welche parallel und gleichzeitig auf beide, jeweils einem Vollauszug 29 zugeordneten Rastelemente wirkt. Mittels der Betätigungstaste 57 ist ferner auch noch eine weitere der Ausziehführung 5 zugeordnete Rasteinrichtung 58 entriegelbar, welche die Ausziehführung in ihrer vollständig eingefahrenen Stellung (Fig. 3 und 4) verriegelt.

Bei den beiden jeweils eine Grundschiene 28, eine Zwischenschiene 50 und eine Ausziehschiene 49 umfassenden Vollauszügen 29 ist jeweils eine die Reihenfolge der Auszieh- bzw. Einschubbewegung der Ausziehschiene 49 und der Zwischenschiene 50 steuernde Priorisierungsmechanik vorgesehen. Im Hinblick auf ein hohes Lasttragevermögen auch bei vollständig ausgezogenen Vollauszügen 29 ist im Übrigen jeweils das rückwärtige Ende der Ausziehschienen 49 in der zugeordneten Zwischenschiene 50 mittels Gleitblöcken geführt.

Die - das Widerlager 51 für die Ausziehführung 5 bildenden - Metallprofile 52 weisen jeweils, in den Winkelbereich zwischen den beiden Schenkeln 53 und 55 eingebettet, einen rohrförmigen Bereich 59 auf. Die rohrförmigen Bereiche 59 dienen nicht nur der Aussteifung der Metallprofile 52. Sie nehmen weiterhin - in dessen Ruhestellung - einen etwa U-förmigen Schiebebügel 60, welcher an dem Frachtgutträger 6 zwischen einer aufragenden Nutzstellung und einer flach unter der Ladeplattform 54 verstauten Ruhestellung verschwenkbarer angebracht ist, dergestalt teilweise auf, dass die beiden zueinander parallelen Schenkel 61 des Schiebebügels 60 zumindest teilweise in die rohrförmigen Bereiche 59 der Metallprofile 52 eingeschoben werden können.

Die Ladeplattform 54 des Frachtgutträgers 6 ist als monolithische, aus faserverstärktem Kunststoff bestehende Kunststoffplattform 62 ausgeführt. Sie weist auf ihrer Unterseite eine wabenförmige Aussteifungsstruktur 63 auf. An der Unterseite der Kunststoffplattform 62 sind zusätzlich zum Widerlager für die Ausziehführung 5, d.h den beiden Metallprofilen 52, vier Radträger 64 angebracht, und zwar dergestalt getrennt von dem Widerlager für die Ausziehführung 5, dass die Metallprofile 52 und die Radträger 64 keine direkte Verbindung untereinander aufweisen. Das Fahrwerk 7 weist zwei in Ausziehrichtung A der Ausziehführung 5 angeordnete vordere Rollen 65 und zwei entgegen der Ausziehrichtung A der Ausziehführung 5 angeordnete hintere Rollen 66 auf. Den hinteren Rollen 66 sind Feststellbremsen 67 zugeordnet, welche über an der rückwärtigen Stirnseite des Frachtgutträgers 6 angeordnete Bremsbedienhebel 68 betätigbar sind. Die Bremsbedienhebel 68 weisen Handgriff-Mulden 69 auf. So dienen die Bremsbedienhebel zugleich als Griffe, an denen eine seitlich von der Ladevorrichtung stehende Bedienperson anfassen kann, um den Frachtgutträger 6 auszufahren bzw. über die Basisstruktur 1 zurückzuziehen.

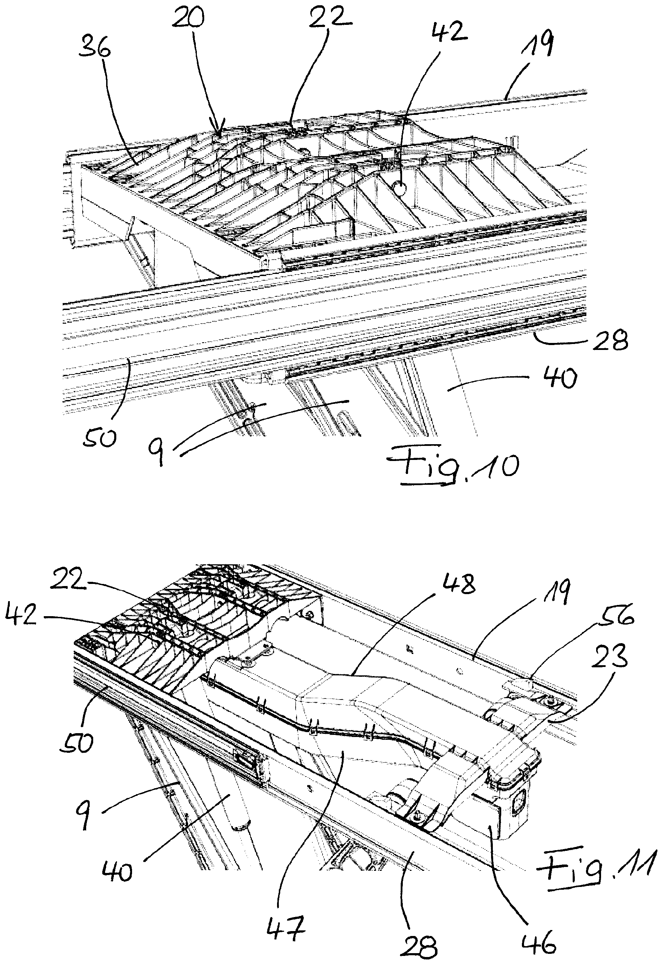

An dem Frachtgutträger 6, nämlich an der Oberseite der Ladeplattform 54 im Bereich der Längskanten, sind vier Zurrstrukturen 70 angebracht. Jeweils eine Zurrstruktur 70 ist dabei direkt mit einem Radträger 64 verbunden. Und zwar weist jede Zurrstruktur 70 ein Zurrelement 71 mit einem - mit dem zugeordneten Radträger 64 über Schraubbolzen verbundenen - Kern und einer diesen umgreifenden, durch den Kern ausgesteiften Mantelstruktur 72 auf. An dem Zurrelement 71 sind jeweils - über dieses unmittelbar kraftübertragend miteinander verbunden - zwei seitliche Verzurrpunkte 73 für das Verzurren der Ladevorrichtung auf der Ladefläche eines Transportfahrzeugs und zwei obere Niederzurrpunkte 74 für das Niederzurren von Frachtguts auf dem Frachtgutträger 6 vorgesehen, in welche insbesondere Zurrösen 75 aufweisende Zurrbolzen 76 einschraubbar sind (Fig. 11) .

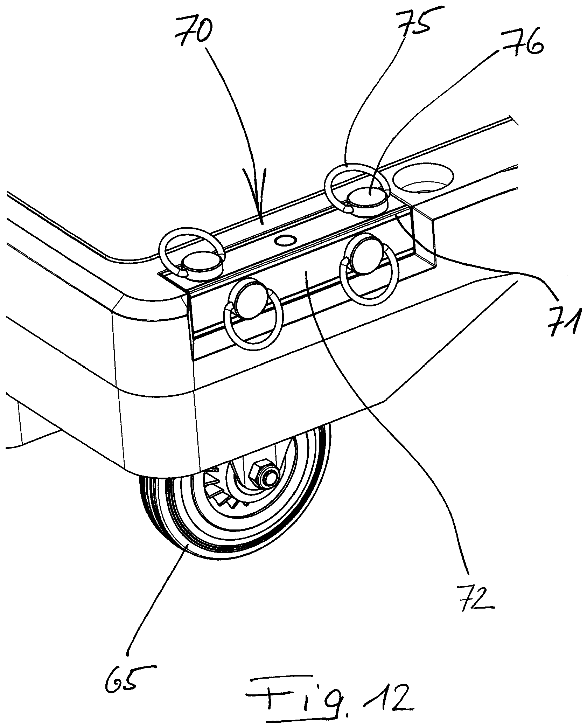

Bei der in Fig. 12 gezeigten Abwandlung bilden eine Abfolge von Niederzurrpunkten 74 und eine Abfolge von Verzurrpunkten 73 - linear mit konstanter Teilung aneinandergereiht - jeweils einen Abschnitt einer Befestigungsschiene 77, wie sie aus der Luftfahrt für die Befestigung von Einbaukomponenten (z.B. der Bestuhlung) in Luftfahrzeugen bekannt sind. In diese Befestigungsschienen 77 sind Zurrbeschläge 78 eingesetzt.

## Patentansprüche

1. Ladevorrichtung, insbesondere um Frachtgut auf einer Verkehrsfläche zu befördern und in ein Transportfahrzeug ein- bzw. aus diesem auszuladen, umfassend eine Basisstruktur (1), eine sich auf dieser abstützende, doppelt wirkende Hubeinrichtung (2) und eine Ladestruktur (3) mit einem Hubrahmen (4), an welchem die Hubeinrichtung (2) angreift, und einem an dem Hubrahmen (4) über eine Ausziehführung (5) gelagerten Frachtgutträger (6), der ein der Fortbewegung der Ladevorrichtung auf der Verkehrsfläche - bei vollständig eingefahrener Hubeinrichtung (2) - dienendes Fahrwerk (7) aufweist, wobei die Hubeinrichtung (2) als Scherenheber-Hubeinrichtung mit sich kreuzenden, an einem Gelenkpunkt (8) gelenkig miteinander verbundenen Lenkern (9, 10) ausgeführt ist, wobei sich mindestens ein Linearantrieb (41) zwischen einem dem Hubrahmen (4) zugeordneten ersten Anlenkpunkt (42) und einem der Scherenheber-Hubeinrichtung (2) zugeordneten zweiten Anlenkpunkt (43) erstreckt,
**dadurch gekennzeichnet,**
**dass** bei vollständig eingefahrener Hubeinrichtung (2) der Gelenkpunk (8) in der Ebene von Längsträgern (19) liegt, welche einen Teil des Hubrahmens (4) bilden, und dass der erste Anlenkpunkt (42) des mindestens einen Linearantriebs (41) oberhalb der Ebene der Längsträger (19) des Hubrahmens (4) an einer diese miteinander verbindenden Brückentraverse (22) angeordnet ist.

2. Ladevorrichtung nach Anspruch 1, **dadurch gekennzeichnet, dass** das mindestens eine obere Festlager (34) der Scherenheber-Hubeinrichtung (2) in der Ebene der Längsträger (19) des Hubrahmens (4) liegt.

3. Ladevorrichtung nach Anspruch 1 oder Anspruch 2, **dadurch gekennzeichnet, dass** die mindestens eine obere Schiebeführung (31) der Hubeinrichtung (2) in der Ebene der Längsträger (19) des Hubrahmens (4) liegt.

4. Ladevorrichtung nach einem der Ansprüche 1 bis 3, **dadurch gekennzeichnet, dass** zwei als Hydraulikzylinder (40) ausgeführte Linearantriebe (41) vorgesehen sind, zwischen denen ein an der Brückentraverse (22) befestigtes Hydraulikaggregat (45) angeordnet ist.

5. Ladevorrichtung nach einem der Ansprüche 1 bis 4, **dadurch gekennzeichnet, dass** die Längsträger (19) des Hubrahmens (4) einen integralen Bestandteil der Ausziehführung (5) darstellen, indem sie jeweils die Grundschiene (28) eines Teleskop-Vollauszugs (29) bilden, in der eine ausziehbare Schiene (30) linear verschiebbar geführt ist.

6. Ladevorrichtung nach einem der Ansprüche 1 bis 5, **dadurch gekennzeichnet, dass** die Ausziehführung (5) eine Rasteinrichtung aufweist, die beim Ausziehen der Ausziehführung (5) zwischen deren vollständig eingefahrener Stellung und deren vollständig ausgefahrener Stellung wirkt und das Ausziehen der Ausziehführung an einer vorgegebenen Stoppstellung des Frachtgutträgers (6) relativ zum Hubrahmen (4) unterbricht.

7. Ladevorrichtung nach Anspruch 6, **dadurch gekennzeichnet, dass** die Rasteinrichtung nur bei einer Stellung des Frachtgutträgers (6) nahe der Stoppstellung entriegelbar ist.

8. Ladevorrichtung nach Anspruch 6 oder Anspruch 7, **dadurch gekennzeichnet, dass** sich die Stoppstellung auf etwa 15% bis 40%, bevorzugt auf etwa 20% bis 35% des vollständigen Ausziehweges der Ausziehführung (5) befindet.

## Claims

1. A loading apparatus, in particular in order to convey cargo on a road surface and to load or unload the same into or from a transport vehicle, comprising a main structure (1), a double-acting lifting device (2) which supports itself on said main structure (1), and a loading structure (3) with a lifting frame (4) on which the lifting device (2) acts, and a cargo support (6) mounted on the lifting frame (4) via a telescopic guide (5), which cargo support (6) has an undercarriage (7) which is used to move the loading apparatus on the road surface, with the lifting device (2) fully retracted, wherein the lifting device (2) is designed as a scissor jack-type lifting device with intersecting links (9, 10) that are articulated to each other in a point of articulation (8), wherein at least one linear drive (41) extends between a first pivot point (42) associated with the lifting frame (4) and a second pivot point (43) associated with the scissor jack-type lifting device (2), **characterized in that**, when the lifting device (2) is fully retracted, the point of articulation (8) is located in the plane of longitudinal members (19) which form a part of the lifting frame (4), and that the first pivot point (42) of the at least one linear drive (41) is arranged above the plane of the longitudinal members (19) of the lifting frame (4) on a raised truss (22) connecting said longitudinal members (19).

2. The loading apparatus according to Claim 1, **characterized in that** the at least one upper fixed bearing (34) of the scissor jack-type lifting device (2) is located in the plane of the longitudinal members (19) of the lifting frame (4).

3. The loading apparatus according to Claim 1 or Claim 2, **characterized in that** the at least one upper guide rail (31) of the lifting device (2) is located in the plane of the longitudinal members (19) of the lifting frame (4) .

4. The loading apparatus according to any one of Claims 1 to 3, **characterized in that** two linear drives (41) designed as hydraulic cylinders (40) are provided, between which a hydraulic power unit (45) is arranged, which is attached to the raised truss (22).

5. The loading apparatus according to any one of Claims 1 to 4, **characterized in that** the longitudinal members (19) of the lifting frame (4) represent an integral component of the telescopic guide (5) by forming respective main rails (28) of a telescopic full extension slide (29), in each of which an extendable rail (30) is supported such that it is linearly displaceable.

6. The loading apparatus according to any one of Claims 1 to 5, **characterized in that** the telescopic guide (5) has a snap-in locking device, which acts when the telescopic guide (5) is extended from its fully retracted position to its fully extended position, and which interrupts the extending of the telescopic guide at a predefined stop position of the cargo support (6) relative to the lifting frame (4).

7. The loading apparatus according to Claim 6, **characterized in that** the snap-in locking device is unlockable only when the cargo support (6) is positioned near the stop position.

8. The loading apparatus according to Claim 6 or Claim 7, **characterized in that** the stop position is located at about 15% to 40%, preferably at about 20% to 35%, of the full extension of the telescopic guide (5).

## Revendications

1. Dispositif de chargement, en particulier pour le transport de marchandises sur une surface de circulation et le chargement ou le déchargement de celles-ci dans un véhicule de transport ou à partir de celui-ci, comportant une structure de base (1), un système élévateur (2) à double action, s'appuyant sur celle-ci, ainsi qu'une structure de chargement (3) avec un châssis élévateur (4), avec lequel le système élévateur (2) s'engage, et un support de marchandises (6) monté sur le châssis élévateur (4) par le biais d'un guidage d'extension (5), lequel présente un train de roulement (7) servant au déplacement du dispositif de chargement sur la surface de circulation - lorsque le système élévateur (2) est entièrement rétracté, dans lequel le système élévateur (2) est conçu comme un système élévateur à ciseaux avec des bras (9, 10) se croisant et reliés l'un à l'autre de façon articulée en un point d'articulation (8), dans lequel au moins un entraînement linéaire (41) s'étend entre un premier point d'articulation (42) attribué au châssis élévateur (4) et un deuxième point d'articulation (43) attribué au système élévateur à ciseaux (2),
**caractérisé en ce que**
lorsque le système élévateur (2) est entièrement rétracté, le point d'articulation (8) se trouve dans le plan de supports longitudinaux (19) formant une partie du châssis élévateur (4), et **en ce que** le premier point d'articulation (42) de l'au moins un entraînement linéaire (41) est disposé au-dessus du plan des supports longitudinaux (19) du châssis élévateur (4) sur une traverse de pont (22) reliant ceux-ci entre eux.

2. Dispositif de chargement selon la revendication 1, **caractérisé en ce qu'**au moins un palier fixe supérieur (34) du système élévateur à ciseaux (2) se trouve dans le plan des supports longitudinaux (19) du châssis élévateur (4).

3. Dispositif de chargement selon la revendication 1 ou la revendication 2, **caractérisé en ce que** l'au moins un guidage coulissant supérieur (31) du système élévateur (2) se trouve dans le plan des supports longitudinaux (19) du châssis élévateur (4).

4. Dispositif de chargement selon l'une des revendications 1 à 3, **caractérisé en ce qu'**il est prévu deux entraînements linéaires (41) conçus comme des cylindres hydrauliques (40), entre lesquels est disposé un groupe hydraulique (45) fixé à la traverse de pont (22).

5. Dispositif de chargement selon l'une des revendications 1 à 4, **caractérisé en ce que** les supports longitudinaux (19) du châssis élévateur (4) constituent un composant intégral du guidage d'extension (5), en formant respectivement le rail de base (28) d'une glissière d'extension complète télescopique (29), dans laquelle un rail extensible (30) est guidé de manière à pouvoir coulisser linéairement.

6. Dispositif de chargement selon l'une des revendications 1 à 5, **caractérisé en ce que** le guidage d'extension (5) présente un système d'encliquetage agissant lors de l'extension du guidage d'extension (5) entre sa position entièrement rétractée et sa position entièrement étendue, et interrompant l'extension du guidage d'extension au niveau d'une position d'arrêt prédéfinie du support de marchandises (6) par rapport au châssis élévateur (4).

7. Dispositif de chargement selon la revendication 6, **caractérisé en ce que** le système d'encliquetage ne peut être déverrouillé que dans une position du support de marchandises (6) proche de la position d'arrêt.

8. Dispositif de chargement selon la revendication 6 ou la revendication 7, **caractérisé en ce que** la position d'arrêt se trouve à une distance d'environ 15% à 40%, de préférence d'environ 20% à 35% de la course d'extension complète du guidage d'extension (5).
